# EUROPÄISCHE PATENTSCHRIFT

(11) **EP 1 979 795 B1**
(45) Veröffentlichungstag und Bekanntmachung des Hinweises auf die Patenterteilung: **08.09.2021**
(21) Anmeldenummer: 07700167.5
(22) Anmeldetag: 25.01.2007
(51) Int. Cl.: G05D 16/06, F24D 10/00, F24D 19/10

(54) **VENTILANORDNUNG ZUM ANSCHLIESSEN EINES WÄRMETAUSCHERS EINER WARMWASSERENTNAHMEVORRICHTUNG AN EIN FERNWÄRMENETZ**
VALVE ASSEMBLY FOR CONNECTING A HEAT EXCHANGER OF A HOT WATER DISCHARGING DEVICE TO A DISTRICT HEATING SYSTEM
SYSTÈME DE VANNES PERMETTANT DE RACCORDER UN ÉCHANGEUR DE CHALEUR D'UN DISPOSITIF DE PRÉLÈVEMENT D'EAU CHAUDE SANITAIRE À UN RÉSEAU DE CHAUFFAGE URBAIN

(30) Priorität: 27.01.2006 DE 102006004179
(43) Veröffentlichungstag der Anmeldung: 15.10.2008
(73) Patentinhaber: Danfoss A/S, 6430 Nordborg (DK)
(72) Erfinder: MØLBÆK, Jens Jørgen, 6430 Nordborg (DK)
(74) Vertreter: Keil & Schaafhausen Patentanwälte PartGmbB
(86) Internationale Anmeldenummer: PCT/DK2007/000033
(87) Internationale Veröffentlichungsnummer: WO 2007/085257

(56) Entgegenhaltungen:
- EP-A1- 0 466 010
- DE-A1- 10 254 239
- DE-C2- 19 618 093
- GB-A- 802 217
- None

## Beschreibung

Die Erfindung betrifft eine Ventilanordnung zum Anschließen eines Wärmetauschers einer Warmwasserentnahmevorrichtung an ein Fernwärmenetz mit einem primärseitigen Ventil, das einen Durchfluss von Wärmeträgerfluid durch eine Primärseite des Wärmetauschers steuert, und einem druckgesteuerten sekundärseitigen Ventil, das auf einem Durchfluss von Brauchwasser durch eine Sekundärseite des Wärmetauschers einwirkt, wobei das primärseitige Ventil durch das sekundärseitige Ventil betätigbar ist, wobei das sekundärseitige Ventil einen an einer Membran angeordneten Ventilsitz und ein als Konus ausgebildetes stationäres Ventilelement aufweist.

Eine derartige Ventilanordnung ist aus DE 102 54 239 A1 bekannt.

Eine weitere Ventilanordnung ist aus DE 196 18 093 C2 bekannt. Das Ventilelement des primärseitigen Ventils und das Ventilelement des sekundärseitigen Ventils sind durch eine Betätigungsstange miteinander verbunden. Wenn Brauchwasser gezapft wird, dann sinkt der Druck am Ausgang des sekundärseitigen Ventils ab, so dass sich das Ventilelement des sekundärseitigen Ventils in eine Öffnungsstellung bewegt. Gleichzeitig damit wird auch das Ventilelement des primärseitigen Ventils weiter von seinem Ventilsitz entfernt, so dass in Abhängigkeit von der Menge des entnommenen Brauchwassers eine entsprechende Wärmemenge auf der Primärseite des Wärmetauschers nachgeführt werden kann.

Die Fertigung einer derartigen Ventilanordnung ist jedoch relativ aufwendig. Das primärseitige Ventil und das sekundärseitige Ventil müssen relativ genau aufeinander abgestimmt werden, damit das primärseitige Ventil nicht zu wenig und nicht zu viel Wärmeträgerfluid in die Primärseite des Wärmetauschers eintreten lässt. Dann wäre das Brauchwasser auf der Sekundärseite entweder zu heiß oder zu kalt. Bei der Fertigung müssen also relativ geringe Toleranzen eingehalten werden.

Der Erfindung liegt die Aufgabe zugrunde, die Fertigung der Ventilanordnung einfach zu gestalten.

Diese Aufgabe wird bei einer Ventilanordnung der eingangs genannten Art mit den Merkmalen des kennzeichnenden Teils des Anspruchs 1 gelöst.

Die Ruheöffnung ist die Öffnung, die das sekundärseitige Ventil dann zeigt, wenn auf der Sekundärseite kein Brauchwasser entnommen wird. In diesem Fall ist der Druck vor und hinter dem sekundärseitigen Ventil praktisch gleich. Eine kleine Öffnung muss vorhanden sein, damit ein Druckausgleich stattfinden kann. Man möchte nun diese Ruheöffnung so genau wie möglich einstellen können. Die Größe der Ruheöffnung bestimmt nämlich u.a. die Ansprechgeschwindigkeit des primärseitigen Ventils. Die Ansprechgeschwindigkeit wird umso höher, je kleiner die Ruheöffnung ist. Bei einer kleinen Ruheöffnung müssten die Teile mit einer sehr hohen Genauigkeit gefertigt werden, wenn die Einstellmöglichkeit nicht vorhanden wäre. Da aber die Einstellmöglichkeit vorhanden ist, können die Teile des sekundärseitigen Ventils mit einer verminderten Genauigkeit gefertigt werden. Die Größe der Ruheöffnung wird dann nach der Fertigung eingestellt, beispielsweise in einer dafür vorgesehenen Testeinrichtung. Wenn das sekundärseitige Ventil auch im Ruhezustand geöffnet ist, dann ist es auch weniger anfällig gegen eine Verstopfung bei niedrigen Durchflussraten. Dies ist ein zusätzlicher Vorteil dieser Ventilanordnung.

Bevorzugterweise ist das sekundärseitige Ventil an einem Ende eines Gehäuses angeordnet. Dies erleichtert die Einstellbarkeit. Wenn das Ventil am Ende des Gehäuses angeordnet ist, dann kann man durch eine entsprechende Endseite des Gehäuses auf das Ventil zugreifen und die Ruheöffnung einstellen.

Vorzugsweise weist das sekundärseitige Ventil einen an einer Membran angeordneten Ventilsitz und ein stationäres Ventilelement auf, dessen Position relativ zu einer Ruhestellung der Membran einstellbar ist. Die Ruhestellung der Membran ist die Stellung, die die Membran einnimmt, wenn auf beiden Seiten der gleiche Druck oder, wenn die Membran durch eine Zusatzkraft, beispielsweise eine Feder, belastet ist, eine vorbestimmte Druckdifferenz herrscht. Wenn sich die Druckverhältnisse über die Membran ändern, dann wird die Membran bewegt und verlagert dann den Ventilsitz gegenüber dem Ventilelement. Das Ventilelement bleibt ohne äußere Eingriffe stationär im Gehäuse, so daß die Strömung durch das sekundärseitige Ventil praktisch nur von den Druckverhältnissen über die Membrane abhängt. Durch eine Verlagerung des Ventilelements beim Einstellen läßt sich aber das Verhältnis zwischen Druck und Strömung durch das sekundärseitige Ventil ändern.

Vorzugsweise ist das Ventilelement als Konus ausgebildet. Ein Konus läßt sich relativ einfach fertigen. Bei einem Konus erzeugt man eine überproportionale Vergrößerung des Durchtrittsquerschnitts mit der Bewegung der Membran. Dies setzt die Schwingungsneigung des sekundärseitigen Ventils herab.

Vorzugsweise ist das Ventilelement in das Gehäuse eingeschraubt. Dies hat zwei Vorteile. Zum einen ist eine Schraubverbindung zwischen dem Ventilelement und dem Gehäuse ausreichend stabil, um die im Betrieb ausreichenden Drücke aufnehmen zu können. Zum anderen läßt sich durch ein Verdrehen des Ventilelements im Gehäuse seine Lage relativ zur Membran verändern, so daß auf einfache Weise eine Einstellbarkeit möglich ist.

Vorzugsweise ist das primärseitige Ventil durch das sekundärseitige Ventil über einen Stößel betätigbar, der durch ein bewegliches Element des sekundärseitigen Ventils angetrieben ist und auf das Ventilelement des primärseitigen Ventils wirkt, wobei der Stößel so kurz ist, daß er im Ruhezustand des beweglichen Elements des sekundärseitigen Ventils einen Abstand zum Ventilelement im geöffneten Zustand des primärseitigen Ventils aufweist. Damit läßt sich das primärseitige Ventil unabhängig vom sekundärseitigen Ventil steuern, solange sich das sekundärseitige Ventil im Ruhezustand befindet. Dies ist immer dann der Fall, wenn auf der Sekundärseite kein Brauchwasser entnommen wird. Erst dann, wenn tatsächlich Brauchwasser entnommen wird und das sekundärseitige Ventil in einem vorbestimmten Maße öffnet, gelangt der Stößel zur Anlage an das Ventil-element des primärseitigen Ventils und sorgt dafür, daß das primärseitige Ventil weiter öffnet. Man kombiniert also erst im Bedarfszustand die beiden Ventile auf der Primärseite und der Sekundärseite, um eine ausreichende Versorgung der Primärseite mit Wärmeträgerfluid so sicherzustellen, daß das Brauchwasser auf der Sekundärseite in ausreichendem Maße erwärmt wird.

Vorzugsweise weist das Ventilelement des primärseitigen Ventils einen temperaturgesteuerten Antrieb auf. Der temperaturgesteuerte Antrieb weist einen Wärmefühler auf, der die Temperatur des Brauchwassers auf der Sekundärseite ermittelt, insbesondere hinter dem sekundärseitigen Ventil. Auch dann, wenn keine Brauchwasser-entnahme aus der Sekundärseite erfolgt, muß das dort vorhandene Wasser auf einer bestimmten Temperatur gehalten werden, um zu vermeiden, daß ein Benutzer beim Zapfen von heißem Brauchwasser zunächst von kaltem Wasser überrascht wird. Dementsprechend ist ein laufender Strom von Wärmeträgerfluid durch die Primärseite des Wärmetauschers erforderlich. Dieser Strom wird durch den temperaturgesteuerten Antrieb des primärseitigen Ventils sichergestellt. Solange also kein Brauchwasser entnommen wird, arbeitet das primärseitige Ventil ausschließlich als Temperatursteuerventil, ohne vom sekundärseitigen Ventil beeinflußt zu werden. Wenn hingegen Brauchwasser entnommen wird, dann hängt die Menge des primärseitigen Wärmeträgerfluids auch von der Menge des entnommenen Brauchwassers ab. Diese Menge wird durch die Öffnung des sekundärseitigen Ventils an das primärseitige Ventil signalisiert.

Bevorzugterweise kommen der Stößel und das Ventilelement des primärseitigen Ventils über eine Berührungsfläche in Kontakt, die senkrecht zur Bewegungsrichtung des Stößels angeordnet ist. Diese Ausgestaltung hat den großen Vorteil, daß man nicht mehr darauf achten muß, daß der Stößel und das Ventilelement des primärseitigen Ventils mit ihren Achsen übereinstimmen. Kleinere seitliche Verschiebungen sind also ohne weiteres zulässig. Dies senkt die Herstellungskosten.

Hierbei ist bevorzugt, daß das Ventilelement einen zum Stößel hin weisenden Vorsprung aufweist, an dem der Stößel zur Anlage kommt. Der Vorsprung, der beispielsweise dadurch gebildet sein kann, daß die Ventilspindel des primärseitigen Ventils das Ventilelement durchdringt, nimmt dann die vom Stößel auf das Ventilelement ausgeübten Kräfte auf. Dieser Vorsprung kann insbesondere aus einem Metall gebildet sein, das weitaus widerstandsfähiger ist, als ein üblicherweise für das Ven-tilelement verwendetes Elastomer. Damit läßt sich eine ausreichende Lebensdauer der Ventilanordnung sicherstellen.

Vorzugsweise ist das primärseitige Ventil in einem ersten Gehäuseteil und das sekundärseitige Ventil in einem zweiten Gehäuseteil angeordnet und die beiden Gehäuseteile sind durch ein drittes Gehäuseteil miteinander verbunden, das die Betätigungseinrichtung aufnimmt, mit der das primärseitige Ventil durch das sekundärseitige Ventil betätigbar ist. Auch eine derartige Ausgestaltung hält die Herstellungskosten niedrig. Die Ventilanordnung besteht sozusagen aus drei unabhängigen Modulen, die getrennt voneinander gefertigt werden können und erst in einem relativ späten Stadium der Herstellung zusammengesetzt werden. Jedes Modul kann also bereits voreingestellt werden, wenn dies erforderlich ist.

Vorzugsweise weist das erste Gehäuseteil einen primärseitigen ersten Anschluß, das zweite Gehäuseteil einen sekundärseitigen zweiten Anschluß und das dritte Gehäuseteil einen primärseitigen zweiten Anschluß und einen sekundärseitigen ersten Anschluß auf. Man verwendet das dritte Gehäuseteil also auch dazu, die Verbindung zwischen der Ventilanordnung und dem Wärmetauscher herzustellen.

Vorzugsweise erstreckt sich die sekundärseitige Membran bis in einen Berührungsbereich zwischen dem zweiten Gehäuseteil und dem dritten Gehäuseteil. Dies hat zwei Vorteile. Zum einen wird die Membran im Gehäuse festgehalten, so daß sie eine definierte Position einnimmt. Zum anderen kann die Membran, die aus einem elastomeren Material gebildet ist, verwendet werden, um das zweite und das dritte Gehäuseteil gegeneinander abzudichten.

Hierbei ist bevorzugt, daß die Membran eine mit dem Ventilsitz in Verbindung stehende Öffnung aufweist, durch die Brauchwasser hindurchtreten kann. Die Membran wird also von Brauchwasser durchströmt, wenn Brauchwasser entnommen wird. Mit dieser Maßnahme kann man dafür Sorge tragen, daß die Ventilanordnung kompakt bleibt.

Vorzugsweise ist dem primärseitigen Ventil ein druckgesteuertes Ventil vorgeschaltet, das eine Membran aufweist, die sich bis in einen Berührungsbereich zwischen dem ersten und dem dritten Gehäuseteil erstreckt. Auch hier kann man die Membran zusätzlich nutzen, um eine Dichtung zwischen den beiden Gehäuseteilen zu bewirken.

Vorzugsweise ist der Stößel in einem Mittelabschnitt des dritten Gehäuseteils gelagert. Damit wird der Stößel automatisch in der richtigen Position zwischen dem primärseitigen Ventil und dem sekundärseitigen Ventil gehalten.

Die Erfindung wird im folgenden anhand eines bevorzugten Ausführungsbeispiels in Verbindung mit der Zeichnung beschrieben. Hierin zeigen:
- Fig. 1: eine Prinzipdarstellung zur Erläuterung des Aufbaus der Ventilanordnung und
- Fig. 2: die Ventilanordnung in einem Längsschnitt.

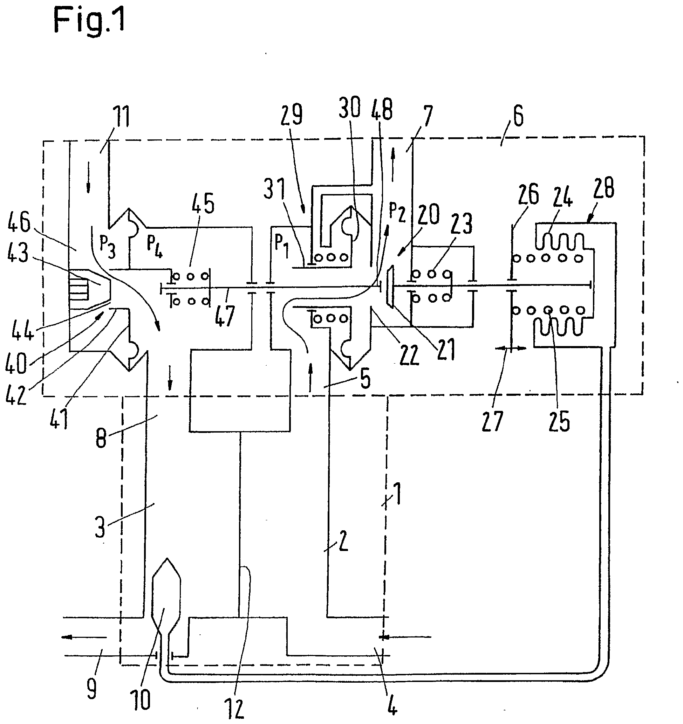

Fig. 1 zeigt einen schematisch dargestellten Wärmetauscher 1 mit einer Primärseite 2 und einer Sekundärseite 3. Die Primärseite 2 weist einen Einlaß 4 auf, der mit einem nicht näher dargestellten Fernwärmeleitungssystem verbunden ist. Die Primärseite 2 weist auch einen Auslaß 5 auf, der über eine Ventilanordnung 6 mit einem Rücklaufanschluß 7 des Fernwärmeleitungsnetzes verbunden ist.

Die Sekundärseite 3 weist einen Eingang 8 auf, durch den Brauchwasser zufließt, und einen Ausgang 9, an dem erwärmtes Brauchwasser entnommen werden kann. Im Bereich des Ausgangs 9 ist ein Temperaturfühler 10 angeordnet, dessen Funktion weiter unten erläutert wird. Der Eingang 8 der Sekundärseite 3 ist über die Ventil-anordnung 6 mit einem Brauchwasseranschluß 11 verbunden, durch den kaltes Brauchwasser zugeführt wird.

In an sich bekannter Weise ist zwischen der Primärseite 2 und der Sekundärseite 3 eine Wärmetauscherfläche 12 angeordnet, die hier nur im Prinzip dargestellt ist. Tatsächlich hat die Wärmetauscherfläche 12 eine wesentlich größere Erstreckung.

Die Ventilanordnung 6 weist ein primärseitiges Ventil 20 mit einem Ventilelement 21 und einem Ventilsitz 22 auf. Das Ventilelement 21 wird durch den Ventilsitz 22 hindurch angeströmt. Das Ventilelement 21 ist durch eine Feder 23 in Öffnungsrichtung vorgespannt. Ein Balgenelement 24, das mit dem Temperaturfühler 10 verbunden ist, wirkt auf das Ventilelement 21 in Schließrichtung. Das Balgenelement 24 arbeitet gegen die Kraft einer Feder 25, die sich an einem verlagerbaren Anschlag 26 abstützt. Durch Verstellen des Anschlags 26 in Richtung eines Doppelpfeiles 27 läßt sich ein Sollwert für die am Ausgang 9 der Sekundärseite 3 herrschende Temperatur des Brauchwassers einstellen.

Wenn die Temperatur am Ausgang 9 der Sekundärseite 3 ansteigt, dann bewegt das Balgenelement 24 das Ventil-element 21 in Richtung auf den Ventilsitz 22 und drosselt damit den Strom von Wärmeträgerfluid durch die Primärseite. Wenn die Temperatur am Ausgang 9 der Sekundärseite 3 absinkt, dann läßt der Druck des Balgen-elements 24 nach, so daß das Ventilelement 21 durch die Kraft der Federn 23, 25 vom Ventilsitz 22 entfernt wird, um einen größeren Durchfluß von Wärmeträgerfluid durch die Primärseite 2 zu ermöglichen. Auf diese Weise ist das primärseitige Ventil 20 ein temperaturgesteuertes Ventil, das durch den temperaturgesteuerten Antrieb 28 gesteuert wird.

Dem primärseitigen Ventil 20 ist noch ein druckgesteuertes Ventil 29 vorgeschaltet. Das druckgesteuerte Ventil 29 weist eine Membrane 30 auf, die von einem Druck P1 vor dem Ventilsitz 22 einerseits und von einem Druck P2 hinter dem Ventilsitz 22 andererseits beaufschlagt wird. Die Membrane 30 verlagert ein Drosselelement 31. Die Funktion des druckgesteuerten Ventils 29 ist an sich bekannt und wird daher nicht weiter erläutert.

Der Strom von Brauchwasser durch die Sekundärseite 3 des Wärmetauschers 1 wird durch ein sekundärseitiges Ventil 40 gesteuert. Das sekundärseitige Ventil 40 weist eine Membran 41 auf, an der ein Ventilsitz 42 befestigt ist. Der Ventilsitz 42 wird bei einer Bewegung der Membran 41 verlagert. Der Ventilsitz 42 bildet mit einem Ventilelement 43 einen Drosselspalt 44, dessen Größe sich in Abhängigkeit von der Stellung der Membran 41 ändert.

Die Stellung der Membran wird bestimmt durch eine Druckdifferenz zwischen einem Druck P3 vor dem Drosselspalt 44 und einem Druck P4 hinter dem Drosselspalt 44. Entgegen dieser Druckdifferenz wirkt die Kraft einer Kompensationsfeder 45, die allerdings erst nach einer gewissen Auslenkung der Membran 41 zu wirken beginnt. Im übrigen wirkt natürlich eine gewisse Eigenspannung der Membran 41 gegen die Druckdifferenz P3 - P4.

Wenn auf beiden Seiten der Membran 41 die gleichen Kräfte herrschen, dann bildet der Drosselspalt 44 eine Ruheöffnung. Die Größe dieser Ruheöffnung ist nun dadurch einstellbar, daß das Ventilelement 43, das hier als Konus ausgebildet ist, in einem Gehäuse 46 verstellt werden kann. Das Ventilelement 43 ist in das Gehäuse 46 eingeschraubt, so daß man durch Drehen des Ventilelements 43 seine Lage relativ zur Membran 41 im drucklosen Zustand verändern kann. Gewünscht ist eine möglichst kleine Ruheöffnung, so daß das sekundärseitige Ventil 40 zwar auch dann nicht geschlossen wird, wenn kein Brauchwasser entnommen wird und der Druck P3 vor dem Drosselspalt 44 gleich dem Druck P4 hinter dem Drosselspalt 44 ist. Gleichwohl soll die Ruheöffnung möglichst klein gehalten werden.

Mit der Membran 41 ist über die Kompensationsfeder 45 ein Stößel 47 verbunden, der dementsprechend mit bewegt wird, wenn sich die Membran 41 bewegt. Dieser Stößel 47 wirkt mit seinem anderen Ende 48 auf das Ventilelement 21 des primärseitigen Ventils 20, wenn die Membran 41 weit genug ausgelenkt worden ist.

Der Stößel 47 ist aber so kurz, daß dann, wenn sich die Membran 41 in ihrer Ruhestellung befindet, also keine Druckdifferenz über die Membran 41 herrscht, der Stößel 47 das Ventilelement 21 nicht berührt, solange dies geöffnet ist.

Dies hat nun folgende Auswirkung: Solange kein Brauchwasser entnommen ist, hat der Drosselspalt 44 seine kleinste Größe und die Membran 41 ist nicht ausgelenkt. In dieser Situation berührt das Ende 48 des Stößels 47 das Ventilelement 21 des primärseitigen Ventils nicht. Das primärseitige Ventil 20 arbeitet also ausschließlich als temperaturgesteuertes Ventil unter der Wirkung des temperaturgesteuerten Antriebs 28. Man kann so auf einfache Weise, d.h. mit einfachem mechanischen Aufwand und auch mit einem relativ einfachen Regelkreis, dafür sorgen, daß die Temperatur am Ausgang 9 der Sekundärseite 3 immer auf einem gewünschten Wert gehalten wird.

Wird nun auf der Sekundärseite 3 Wasser entnommen, dann sinkt der Druck P4 ab und die Membran 41 wird über die Druckdifferenz P3 - P4 ausgelenkt. Dabei kommt der Stößel 47 in Kontakt mit dem Ventilelement 21 und beaufschlagt dieses in Öffnungsrichtung, so daß zusätzlich zu der Temperatursteuerung auch eine Beeinflussung des primärseitigen Ventils 20 durch die auf der Sekundärseite durchströmende Menge an Brauchwasser gegeben ist.

Sobald die Wasserentnahme an der Sekundärseite 3 beendet wird, kehrt die Membran 41 in ihren Ruhezustand zurück und die Steuerung des primärseitigen Ventils 20 kann sehr schnell wieder auf eine reine Temperatursteuerung umschalten.

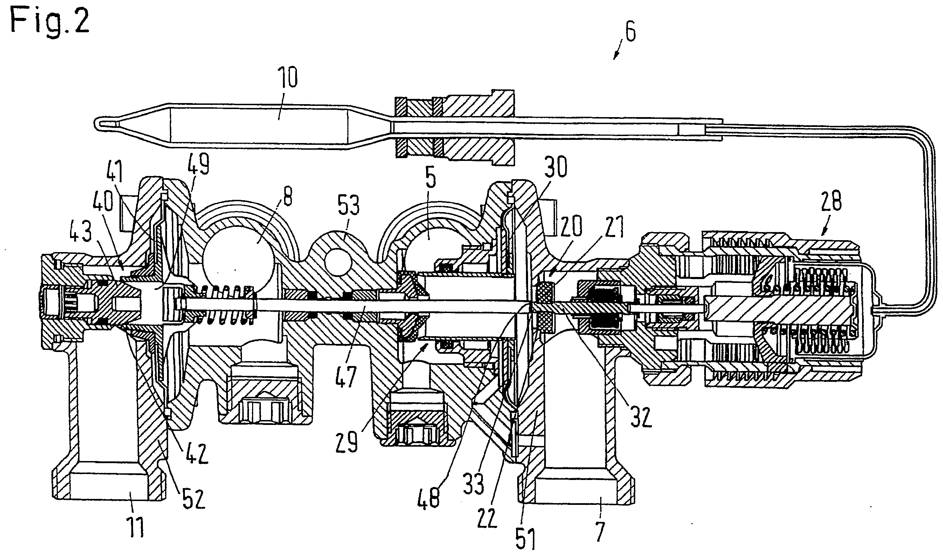

Aus Fig. 2 ergibt sich nun der mechanische Aufbau der Ventilanordnung 6. Gleiche Teile sind mit den gleichen Bezugszeichen wie in Fig. 1 bezeichnet.

Die Ventilanordnung weist ein erstes Gehäuseteil 51 auf, das das primärseitige Ventil 20 aufnimmt, ein zweites Gehäuseteil 52, das das sekundärseitige Ventil 40 aufnimmt, und ein drittes Gehäuseteil 53, das das erste Gehäuseteil 51 mit dem zweiten Gehäuseteil 52 verbindet und im übrigen den Stößel 47 lagert. Im ersten Gehäuseteil 51 ist der Rücklaufanschluß 7 angeordnet. Dieser bildet einen ersten Anschluß der Primärseite. Im zweiten Gehäuseteil 52 ist der Brauchwasseranschluß 11 angeordnet. Dieser bildet einen zweiten Anschluß der Sekundärseite. Im dritten Gehäuseteil ist der Auslaß 5 und der Eingang 8 angeordnet. Diese beiden Anschlüsse bilden also den zweiten Anschluß der Primärseite und einen ersten Anschluß der Sekundärseite.

Die beiden Membranen 30, 41 erstrecken sich bis in einen Berührungsbereich zwischen dem ersten Gehäuseteil 51 und dem dritten Gehäuseteil 53 bzw. dem zweiten Gehäuseteil 52 und dem dritten Gehäuseteil 53. Dies hat den Vorteil, daß die beiden Membranen 30, 41 durch das Zusammensetzen der drei Gehäuseteile einerseits fixiert werden, andererseits aber auch als Dichtungen zwischen den Gehäuseteilen 51-53 verwendet werden können.

Das erste Gehäuseteil 51 mit dem primärseitigen Ventil 20, das zweite Gehäuseteil 52 mit dem sekundärseitigen Ventil 40 und das dritte Gehäuseteil 53 mit dem Stößel 47 können jeweils für sich vormontiert werden. Dabei ist eine Ausrichtung der einzelnen Elemente quer zu ihrer Bewegungsrichtung nur in einem relativ groben Maß erforderlich, weil beispielsweise der Stößel 47 und das Ventilelement 21 über eine Berührungsfläche am Ende 48 aneinander anliegen, die quer zur Längserstreckung des Stößels 47 angeordnet ist. Das Ventilelement 21 muß also nicht genau mittig getroffen werden.

Das Ventilelement 21 weist eine Spindel 32 auf, die das Ventilelement 21 durchragt und auf der anderen Seite einen Vorsprung 33 bildet, an dem der Stößel 47 anliegt. Dieser Vorsprung 33 kann dementsprechend aus einem Metall gebildet sein, das mit dem Metall des Stößels 47 verschleißarm zusammenwirkt. Der Vorsprung 33 ist wesentlich widerstandsfähiger gegen eine Beaufschlagung durch den Stößel 47 als das Ventilelement 21 selbst, das in der Regel aus einem elastomeren Material gebildet ist.

Die Membran 41 weist eine Öffnung 49 auf, durch die Brauchwasser strömt, das durch den Ventilsitz 42 getreten ist. Um dieses Brauchwasser auch zum Eingang 8 des Wärmetauschers gelangen zu lassen, ist der Stößel 47 zweckmäßigerweise über einen käfigartigen Verbinder mit der Membran 41 verbunden, der nicht näher dargestellt ist und beispielsweise drei sternförmig angeordnete Beine aufweist.

In Fig. 2 sind das primärseitige Ventil 20 und das sekundärseitige Ventil 40 in vollkommen geschlossenem Zustand dargestellt. In diesem Zustand kann der Stößel 47 am Ventilelement 21, genauer gesagt dessen Vorsprung 33, anliegen. Im Betrieb wird aber das Ventilelement 21 weiter vom Ventilsitz 22 abheben als der Ventilsitz 42 vom Ventilelement 43, so daß ohne Brauchwasserentnahme ein wirksamer Abstand zwischen dem Stößel 47 und dem Ventilelement 21 besteht.

## Patentansprüche

1. Ventilanordnung zum Anschließen eines Wärmetauschers (1) einer Warmwasserentnahmevorrichtung an ein Fernwärmenetz mit einem primärseitigen Ventil (20), das einen Durchfluss von Wärmeträgerfluid durch eine Primärseite (2) des Wärmetauschers (1) steuert, und einem druckgesteuerten sekundärseitigen Ventil (40), das auf einem Durchfluss von Brauchwasser durch eine Sekundärseite (3) des Wärmetauschers (1) einwirkt, wobei das primärseitige Ventil (20) durch das sekundärseitige Ventil (40) betätigbar ist, wobei das sekundärseitige Ventil (40) einen an einer Membran (41) angeordneten Ventilsitz (42) und ein stationäres Ventilelement (43) aufweist, **dadurch gekennzeichnet, dass**, wenn auf der Sekundärseite (3) kein Brauchwasser entnommen wird, das sekundärseitige Ventil (40) nicht geschlossen ist, sondern eine kleine Ruheöffnung aufweist, wobei die Membran (41) in einer Ruhestellung ist, und dass die Position des Ventilelements (43) relativ zu der Ruhestellung der Membran (41) einstellbar ist, so dass das sekundärseitige Ventil (40) eine einstellbare Ruheöffnung (44) aufweist.

2. Ventilanordnung nach Anspruch 1, **dadurch gekennzeichnet, dass** das sekundärseitige Ventil (40) an einem Ende eines Gehäuses (46) angeordnet ist.

3. Ventilanordnung nach Anspruch 1 oder 2, **dadurch gekennzeichnet, dass** das Ventilelement (43) als Konus ausgebildet ist.

4. Ventilanordnung nach Anspruch 3, wenn dieser auf Anspruch 2 zurückbezogen ist, **dadurch gekennzeichnet, dass** das Ventilelement (43) in das Gehäuse (46) eingeschraubt ist.

5. Ventilanordnung nach einem der Ansprüche 1 bis 4, **dadurch gekennzeichnet, dass** ein Stößel (47) und ein Ventilelement (21) des primärseitigen Ventils (20) über eine Berührungsfläche (48) in Kontakt kommen, die senkrecht zur Bewegungsrichtung des Stößels (47) angeordnet ist.

6. Ventilanordnung nach Anspruch 5, **dadurch gekennzeichnet, dass** das Ventilelement (21) einen zum Stößel (47) hinweisenden Vorsprung (33) aufweist, an dem der Stößel (47) zur Anlage kommt.

7. Ventilanordnung nach einem der Ansprüche 1 bis 6, **dadurch gekennzeichnet, dass** das primärseitige Ventil (20) in einem ersten Gehäuseteil (51) und das sekundärseitige Ventil (40) in einem zweiten Gehäuseteil (52) angeordnet ist und die beiden Gehäuseteile (51, 52) durch ein drittes Gehäuseteil (53) miteinander verbunden sind, das die Betätigungseinrichtung aufnimmt, mit der das primärseitige Ventil (20) durch das sekundärseitige Ventil (40) betätigbar ist.

8. Ventilanordnung nach Anspruch 7, **dadurch gekennzeichnet, dass** das erste Gehäuseteil (51) einen primärseitigen ersten Anschluss (7), das zweite Gehäuseteil (52) einen sekundärseitigen zweiten Anschluss (11) und das dritte Gehäuseteil (53) einen primärseitigen zweiten Anschluss (5) und einen sekundärseitigen ersten Anschluss (8) aufweist.

9. Ventilanordnung nach Anspruch 7 oder 8, **dadurch gekennzeichnet, dass** sich die sekundärseitige Membran (41) bis in einen Berührungsbereich zwischen dem zweiten Gehäuseteil (52) und dem dritten Gehäuseteil (53) erstreckt.

10. Ventilanordnung nach Anspruch 9, **dadurch gekennzeichnet, dass** die Membran eine mit dem Ventilsitz (42) in Verbindung stehende Öffnung (49) aufweist, durch die Brauchwasser hindurchtreten kann.

11. Ventilanordnung nach einem der Ansprüche 7 bis 10, **dadurch gekennzeichnet, dass** dem primärseitigen Ventil (20) ein druckgesteuertes Ventil (29) vorgeschaltet ist, das eine Membran (30) aufweist, die sich bis in einen Berührungsbereich zwischen dem ersten Gehäuseteil (52) und dem dritten Gehäuseteil (53) erstreckt.

12. Ventilanordnung nach einem der Ansprüche 7 bis 11, wenn diese auf den Anspruch 5 zurückbezogen sind, **dadurch gekennzeichnet, dass** der Stößel (47) in einem Mittelabschnitt des dritten Gehäuseteils (53) gelagert ist.

## Claims

1. A valve assembly for connecting a heat exchanger (1) of a hot water discharging device to a district heating system, comprising a primary-side valve (20) controlling a flow of heat transfer fluid through a primary-side (2) of the heat exchanger (1), and a pressure-controlled secondary-side valve (40) acting on a flow of service water through a secondary-side (3) of the heat exchanger (1), the primary-side valve (20) being operable by the secondary-side valve (40), wherein the secondary-side valve (40) has a valve seat (42) arranged on a diaphragm (41) and a stationary valve element (43), **characterized in that**, when no service water is being drawn off on the secondary-side (3), the secondary-side valve (40) is not closed, but has a small rest opening, the diaphragm (41) being in a rest position, and that the position of the valve element (43) is adjustable relative to the rest position of the diaphragm (41) so that the secondary-side valve (40) has an adjustable rest opening (44).

2. The valve assembly according to claim 1, **characterized in that** the secondary-side valve (40) is arranged at one end of a housing (46).

3. The valve assembly according to claim 1 or 2, **characterized in that** the valve element (43) is in form of a cone.

4. The valve assembly according to claim 3, when referred back to claim 2, **characterized in that** the valve element (43) is screwed into the housing (46).

5. The valve assembly according to any of claims 1 to 4, **characterized in that** a tappet (47) and a valve element (21) of the primary-side valve (20) come into contact via a contact surface (48) arranged perpendicular to the direction of movement of the tappet (47).

6. The valve assembly according to claim 5, **characterized in that** the valve element (21) has a projection (33) facing the tappet (47), against which the tappet (47) comes to rest.

7. The valve assembly according to any of claims 1 to 6, **characterized in that** the primary-side valve (20) is arranged in a first housing part (41) and the secondary-side valve (40) is arranged in a second housing part (42), and the two housing parts (51, 52) are connected to one another by a third housing part (43) which accommodates the actuating device with which the primary-side valve (20) can be actuated by the secondary-side valve (40).

8. The valve assembly according to claim 7, **characterized in that** the first housing part (51) comprises a primary-side first connection (7), the second housing part (52) comprises a secondary-side second connection (11) and the third housing part (53) comprises a primary-side second connection (5) and a secondary-side first connection (8).

9. The valve assembly according to claim 7 or 8, **characterized in that** the secondary-side diaphragm (41) extends into a contact region between the second housing part (52) and the third housing part (53).

10. The valve assembly according to claim 9, **characterized in that** the diaphragm comprises an opening (49) communicating with the valve seat (42), through which service water can pass.

11. The valve assembly according to any of claims 7 to 10, **characterized in that** a pressure-controlled valve (29) is connected upstream the primary-side valve (20), which valve (29) comprises a diaphragm (30) which extends into a contact region between the first housing part (52) and the third housing part (53).

12. The valve assembly according to any of claims 7 to 11, when referred back to claim 5, **characterized in that** the plunger (47) is mounted in a central portion of the third housing part (53).

## Revendications

1. Système de vannes permettant de raccorder un échangeur de chaleur (1) d'un dispositif de prélèvement d'eau chaude sanitaire à un réseau de chauffage urbain, comportant une vanne de côté primaire (20) qui commande un débit de fluide caloporteur à travers un côté primaire (2) de l'échangeur de chaleur (1), et une vanne de côté secondaire commandée par pression (40) qui agit sur un débit d'eau sanitaire à travers un côté secondaire (3) de l'échangeur de chaleur (1), la vanne de côté primaire (20) étant actionnable par la vanne de côté secondaire (40), la vanne de côté secondaire (40) présentant un siège de vanne (42) disposé au niveau d'une membrane (41) et un élément de vanne stationnaire (43), **caractérisé en ce que**, lorsqu'aucune eau sanitaire n'est prélevée sur le côté secondaire (3), la vanne de côté secondaire (40) n'est pas fermée mais présente une petite ouverture de repos, la membrane (41) étant dans une position de repos, et que la position de l'élément de vanne (43) est réglable par rapport à la position de repos de la membrane (41), de sorte que la vanne de côté secondaire (40) présente une ouverture de repos réglable (44).

2. Système de vannes selon la revendication 1, **caractérisé en ce que** la vanne de côté secondaire (40) est disposée à une extrémité d'un boîtier (46).

3. Système de vannes selon la revendication 1 ou 2, **caractérisé en ce que** l'élément de soupape (43) se présente sous forme d'un cône.

4. Système de vannes selon la revendication 3 si celle-ci se réfère à la revendication 2, **caractérisé en ce que** l'élément de soupape (43) est vissé dans le boîtier (46) .

5. Système de vannes selon une des revendications 1 à 4, **caractérisé en ce qu'**un poussoir (47) et un élément de vanne (21) de la vanne de côté primaire (20) viennent en contact par l'intermédiaire d'une surface de contact (48) qui est disposée perpendiculairement au sens de mouvement du poussoir (47).

6. Système de vannes selon la revendication 5, **caractérisé en ce que** l'élément de vanne (21) présente une saillie (33) orientée vers le poussoir (47) et sur laquelle le poussoir (47) vient se poser.

7. Système de vannes selon une des revendications 1 à 6, **caractérisé en ce que** la vanne de côté primaire (20) est disposée dans une première pièce de boîtier (51) et la vanne de côté secondaire (40) dans une deuxième pièce de boîtier (52) et que les deux pièces de boîtier (51, 52) sont connectées ensemble par une troisième pièce de boîtier (53) qui reçoit le dispositif d'actionnement grâce auquel la vanne de côté primaire (20) est actionnable par la vanne de côté secondaire (40).

8. Système de vannes selon la revendication 7, **caractérisé en ce que** la première pièce de boîtier (51) présente un premier raccordement de côté primaire (7), la deuxième pièce de boîtier (52) un second raccordement de côté secondaire (11) et la troisième pièce de boîtier (53) un second raccordement de côté primaire (5) et un premier raccordement de côté secondaire (8).

9. Système de vannes selon la revendication 7 ou 8, **caractérisé en ce que** la membrane de côté secondaire (41) s'étend jusque dans une zone de contact entre la deuxième pièce de boîtier (52) et la troisième pièce de boîtier (53).

10. Système de vannes selon la revendication 9, **caractérisé en ce que** la membrane présente une ouverture (49) en liaison avec le siège de vanne (42) et à travers laquelle l'eau sanitaire peut passer.

11. Système de vannes selon une des revendications 7 à 10, **caractérisé en ce que**, en amont de la vanne de côté primaire (20), est disposée une vanne commandée par pression (29) qui présente une membrane (30) qui s'étend dans une zone de contact entre la première pièce de boîtier (52) et la troisième pièce de boîtier (53).

12. Système de vannes selon une des revendications 7 à 11 si celles-ci se réfèrent à la revendication 5, **caractérisé en ce que** le poussoir (47) s'appuie dans une section médiane de la troisième pièce de boîtier (53) .
